# EUROPEAN PATENT SPECIFICATION

(11) **EP 2 094 550 B1**
(45) Date of publication and mention of the grant of the patent: **12.03.2014**
(21) Application number: 07865968.7
(22) Date of filing: 21.12.2007
(51) Int. Cl.: B60T 13/74, B60T 17/18

(54) **BRAKE WITH FIELD RESPONSIVE MATERIAL**
BREMSE MIT AUF EIN FELD REAGIERENDEM MATERIAL
FREIN POURVU D'UN MATÉRIAU RÉPONDANT AU CHAMP MAGNÉTIQUE

(30) Priority: 22.12.2006 US 871610 P
(43) Date of publication of application: 02.09.2009
(73) Proprietor: LORD CORPORATION, Cary, NC 27511 (US)
(72) Inventor: ST. CLAIR, Kenneth A., Cary, NC 27513 (US); MARJORAM, Robert H., Holly Springs, NC 27540 (US); HARDIN, William C., Cary, NC 27511 (US); HONTZ, Marlene, Moncure, NC 27559 (US); KOESTER, Stephen, Cary, NC 27511 (US)
(74) Representative: Butler, Daniel James
(86) International application number: PCT/US2007/088574
(87) International publication number: WO 2008/080070

(56) References cited:
- WO-A-03/036120
- DE-A1- 19 848 186
- DE-A1-102005 052 310
- US-A1- 2002 023 794

## Description

### Cross Reference to Related Applications

The present application claims priority to U.S. Provisional Patent Application Serial No. 60/871,610, filed December 22, 2006.

### Field of the Invention

The invention relates to the field of motion control devices. The invention relates to the field of controllable brakes. More Particularly the invention relates to the field of controllable brakes with magnetic field responsive materials.

### Background of the Invention

There is a need for controllable brakes for controlling motion. There is a need for a robust controllable brake with improved performance. There is a need for an economic controllable brake with a magnetic field responsive material and a magnetic field generator. WO 03/036120A describes a brake of this general type.

### Summary of the Invention

The invention includes a controllable brake as claimed in claim 1. The controllable brake preferably includes a magnetically permeable rotor. The controllable brake preferably includes a shaft connected to the magnetically permeable rotor. The controllable brake preferably includes a housing having a first housing chamber rotatably housing the magnetically permeable rotor therein, and including a magnetic field generator spaced from the magnetically permeable rotor, and configured and positioned for generating a controllable magnetic field to control a relative motion of the magnetically permeable rotor, and a second housing chamber containing control electronics therein, the second housing chamber electronics including at least a first oriented electronic noncontacting magnetic sensor, the at least first oriented electronic noncontacting magnetic sensor oriented relative to the rotating magnetic target and the shaft wherein the at least first oriented electronic noncontacting magnetic sensor monitors the rotation of the rotating magnetic target.

It is to be understood that both the foregoing general description and the following detailed description are exemplary of the invention, and are intended to provide an overview or framework for understanding the nature and character of the invention as it is claimed. The accompanying drawings are included to provide a further understanding of the invention, and are incorporated in and constitute a part of this specification. The drawings illustrate various embodiments of the invention, and together with the description serve to explain the principals and operation of the invention.

### Brief Description of the Drawings

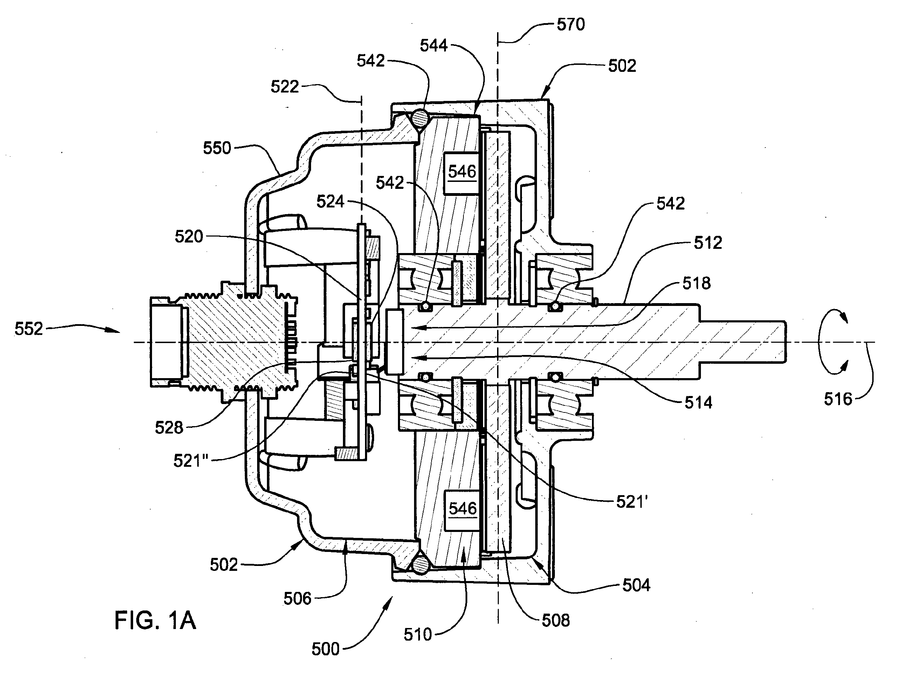

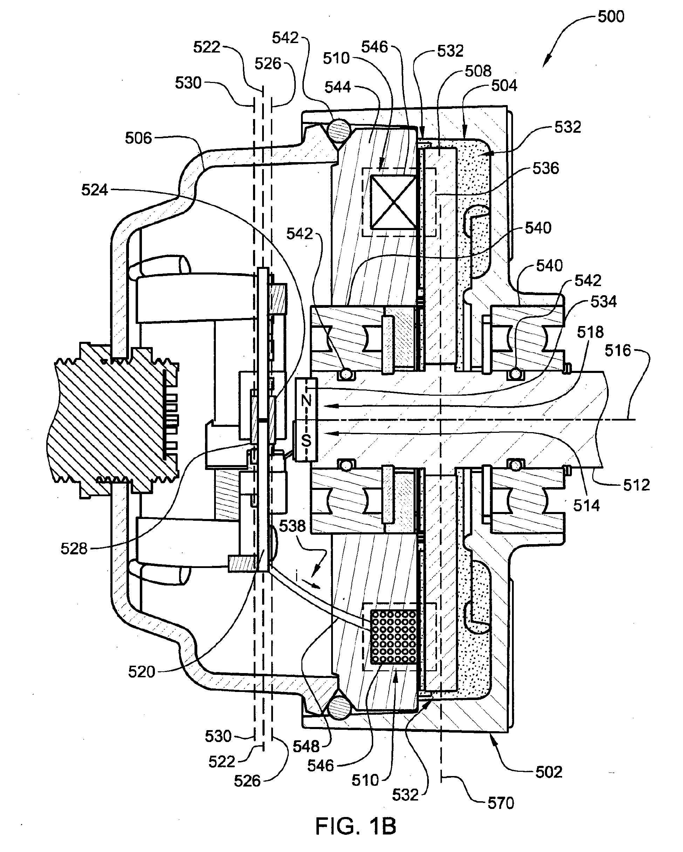

FIG. 1A-B show cross section views of a controllable brake.

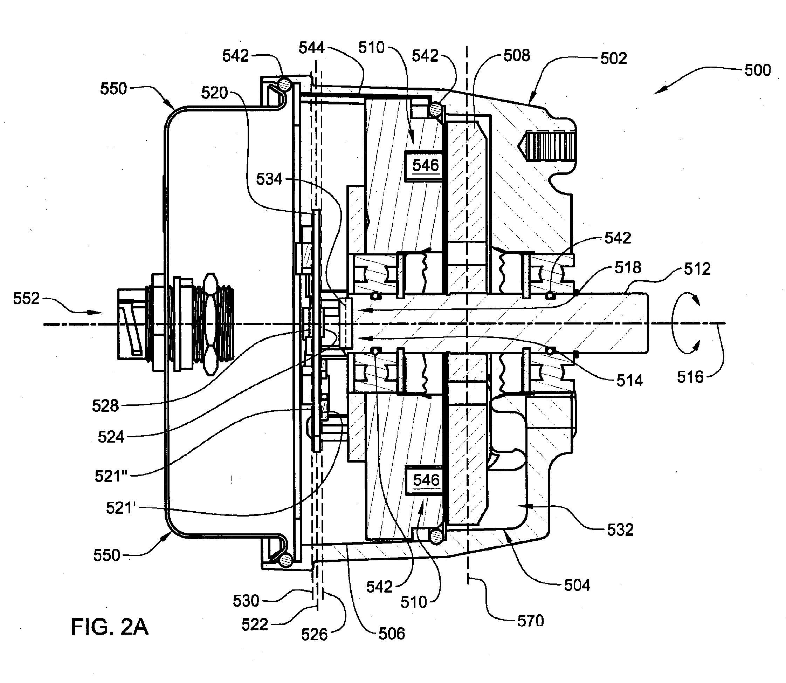

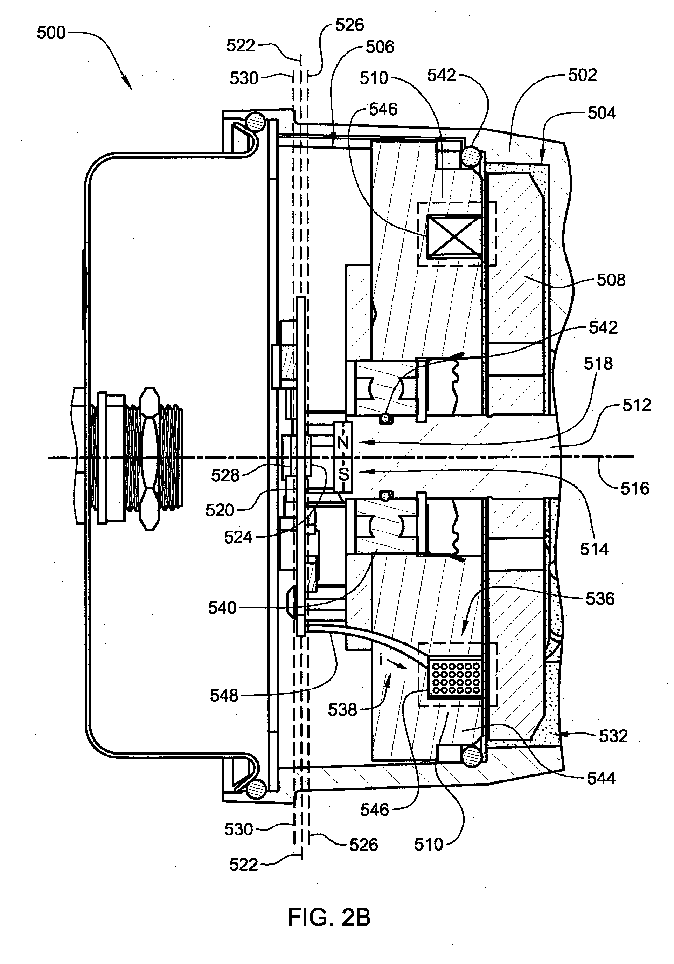

FIG. 2A-B show cross section views of a controllable brake.

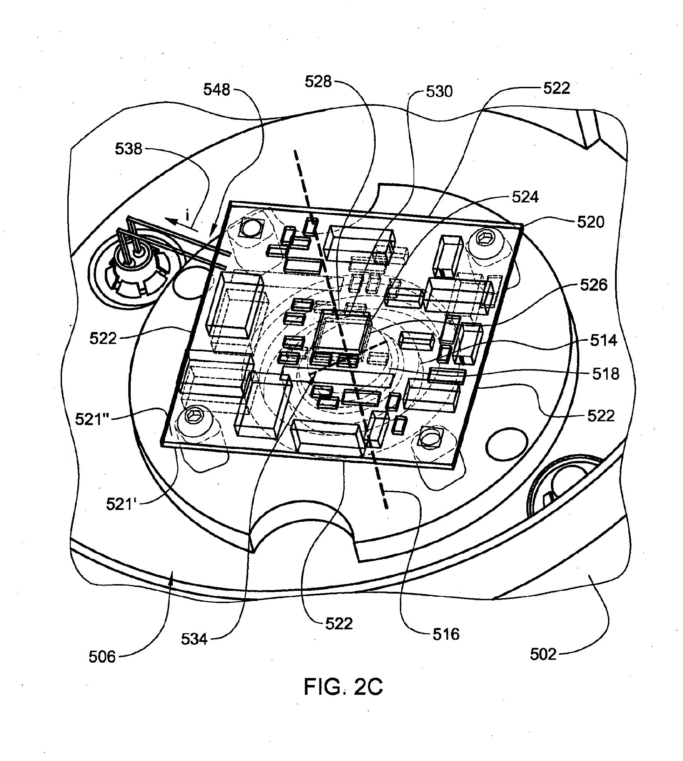

FIG. 2C shows a view of a controllable brake with the circuit board illustrated transparently to show electronic noncontacting magnetic sensors oriented on both sides of the circuit board.
FIG. 3 shows a controllable brake system schematic.
FIG. 4 shows four positional outputs for a controllable brake with two oriented electronic noncontacting magnetic sensors.

### Detailed Description of the Preferred Embodiment

Additional features and advantages of the invention will be set forth in the detailed description which follows, and in part will be readily apparent to those skilled in the art from that description or recognized by practicing the invention as described herein, including the detailed description which follows, the claims, as well as the appended drawings.

Reference will now be made in detail to the present preferred embodiments of the invention, examples of which are illustrated in the accompanying drawings.

In an embodiment the invention includes a controllable brake. The controllable brake preferably includes a housing including a first chamber and a second chamber. The controllable brake preferably includes a shaft, the shaft extending through the first chamber and the second chamber with an axis of rotation, the shaft having a first shaft end. The controllable brake preferably includes a controllable brake rotor made integral with the shaft, the rotor housed in the first chamber, with the rotor having a rotation plane preferably normal to the axis of rotation. The controllable brake preferably includes a controllable brake magnetic field generator located in the first chamber proximate the controllable brake rotor, the controllable brake magnetic field generator for generating a controllable magnetic field strength. The controllable brake preferably includes a controllable brake rotating magnetic target integrated with the shaft proximate the first shaft end, the controllable brake rotating magnetic target housed in the second chamber. The controllable brake preferably includes a controllable brake electronics circuit board mounted in the second chamber, the controllable brake electronics circuit board having a control board plane, the control board plane oriented normal to the shaft axis of rotation. The controllable brake preferably includes a first electronic noncontacting magnetic sensor having a first sensor plane, the first electronic noncontacting magnetic sensor integrated on the controllable brake electronics circuit board with the first sensor plane parallel with the control board plane. The controllable brake preferably includes a second electronic noncontacting magnetic sensor having a second sensor plane, the second electronic noncontacting magnetic sensor integrated on the controllable brake electronics circuit board with the second sensor plane parallel with the control board plane with the control board plane between the first sensor plane and the second sensor plane, the first electronic noncontacting magnetic sensor and the second electronic noncontacting magnetic sensor monitoring the rotation of the controllable brake rotating magnetic target and outputting a rotational position of the controllable brake rotating magnetic target wherein the controllable magnetic field strength generated by the controllable brake magnetic field generator is determined by the rotational position to control a relative motion of the controllable brake rotor.

In preferred embodiments the electronic noncontacting magnetic sensors preferably comprise integrated circuit semiconductor sensor chips with at least two positional outputs. Preferably the electronic noncontacting magnetic sensor integrated circuit semiconductor sensor chip has at least two dies. Preferably the at least two dies are ASICs (Application Specific Integrated Circuits). In a preferred embodiment the at least two dies are side by side dies in the integrated circuit semiconductor sensor chip. In a preferred embodiment the at least two dies are vertically stacked dies in the integrated circuit semiconductor sensor chip. In a preferred embodiment the integrated circuit semiconductor sensor chip ASIC die include a magnetoresistive material, preferably with electrical resistance changes in the presence of the magnetic target magnetic field, preferably with magnetoresistive elements arranged in a Wheatstone bridge. In a preferred embodiment the integrated circuit semiconductor sensor chip ASIC die include a Hall Effect element, preferably a plurality of oriented Hall Effect elements, preferably silicon semiconductor Hall effect elements which detect the magnetic target magnetic field.

The controllable brake 500 preferably includes a housing 502. The housing 502 preferably includes a first sealed chamber 504 and a second sealed chamber 506. The controllable brake preferably includes a shaft 512 with an axis of rotation 516 and a first shaft end 514. Preferably the shaft extends through the first sealed chamber and the second sealed chamber. The controllable brake 500 preferably includes a controllable brake rotor 508 made integral with the shaft, with the rotor 508 housed in the first sealed chamber 504, with the rotor 508 having a rotation plane 570 preferably normal to the axis of rotation 516. The controllable brake 500 preferably includes a controllable brake magnetic field generator 510 located in the first chamber proximate the controllable brake rotor 508, the controllable brake magnetic field generator for generating a controllable magnetic field strength. The controllable brake preferably includes a controllable brake rotating magnetic target 518 made integral with the shaft proximate the first shaft end 514 with the controllable brake rotating magnetic target 518 housed in the second sealed chamber, and a controllable brake electronics circuit board 520 mounted in the second sealed chamber. Preferably the brake operation electronics control board 520 controls and/or monitors the operation of the controllable brake 500. The controllable brake electronics circuit board 520 having a control board plane 522, the control board plane 522 oriented normal to the axis of rotation 516, a first electronic noncontacting magnetic sensor 524 having a first sensor plane 526, the first electronic noncontacting magnetic sensor 524 integrated on the controllable brake electronics circuit board 520 with the first sensor plane 526 parallel with the control board plane 522, and a second electronic noncontacting magnetic sensor 528 having a second sensor plane 530, the second electronic noncontacting magnetic sensor 528 integrated on the controllable brake electronics circuit board 520 with the second sensor plane 530 parallel with the control board plane 522 with the control board plane 522 between the first sensor plane 526 and the second sensor plane 530, the first electronic noncontacting magnetic sensor 524 and the second electronic noncontacting magnetic sensor 528 monitoring the rotation of the controllable brake rotating magnetic target 518 and outputting a rotational position of the controllable brake rotating magnetic target wherein the controllable magnetic field strength generated by the controllable brake magnetic field generator 510 is determined by the rotational position to control a relative motion of the controllable brake rotor 508. The controllable brake preferably includes a field responsive controllable material 532 sealed in the first chamber 504, preferably with the rheology of the field responsive controllable material being affected by the magnetic field generator 510. Preferably the electronic noncontacting magnetic sensors 524, 528 monitor the rotation of the rotating magnetic target 518, preferably with the magnetic sensors 524, 528 oriented and mounted relative to the shaft end 514 and its axis of rotation 516. Preferably the electronic noncontacting magnetic sensors 524, 528 are substantially planar sensors, with their sensor plane normal to axis of rotation 516, with the axis 516 centrally intersecting the sensing centers of the sensors 524, 528 with the sensor's sensing centers aligned with the axis 516. Preferably the magnetic target 518 is at the end of the shaft, preferably with the magnetic target 518 comprised of a magnet with north and south poles oriented relative and normal to the shaft axis of rotation 516 with the opposed N and S poles separated by the axis of rotation 516. Preferably the field responsive controllable material 532 is comprised of magnetic metal ferrous particles and lubricant, preferably dry ferrous particles and dry lubricant (preferably dry molybdenum disulfide). Preferably the controllable brake rotating magnetic target 518 is a permanent magnet with a north pole (N) and a south pole (S) opposed along a north south axis 534, with the north south axis 534 perpendicular with the shaft axis of rotation 516. Preferably the controllable brake 500 includes field responsive controllable material 532 sealed in the first chamber 504, with the field responsive controllable material 532 being affected by the controllable magnetic field strength, and the magnetic field generator 510 is adapted to generate a magnetic flux in a direction through the field responsive controllable material 532 towards the rotor 508, and the controllable brake electronics circuit board 520 provides a controlled current to the magnetic field generator 510. Preferably the controllable brake 500 includes a field responsive controllable material 532 sealed in the first chamber 504 with a rheology of the field responsive controllable material 532 being affected by the controllable magnetic field strength, and the magnetic field generator 510 is adapted to generate a magnetic flux 536 in a direction through the field responsive controllable material 532 towards the rotor 508, and the controllable brake electronics circuit board 520 provides a controlled current 538 to the magnetic field generator 510. Preferably the controllable brake shaft 512 is supported for rotation about axis516 by bearings 540 in the housing 502, and further including seals 542 for sealing the first chamber to retain the controllable material 532 therein, preferably with the first and second chambers sealed from each other with the seals 542 and the housing members to provide the first and second separate sealed chambers 504,506, preferably with the field generator 510, including a pole piece member 544 which provides for both the generation of a magnetic field with an electromagnetic coil 546 and a housing divider for separating the housing 502 into the first and second chambers. Preferably the magnetic field generator 510 includes an electromagnetic coil 546 and the controllable brake electronics circuit board 520 is electrically connected with the magnetic field generator electromagnetic coil 546, preferably with electrical contact connections leads 548 to the EM coil 546. Preferably the electronics circuit board 520 provides a current 538 (i) to EM coil 546, for applying magnetic field flux 536 whose strength is determined by the rotational position of the rotor 508, with the magnetic target 518 rotation angle sensed by the sensors 524, 528. In a preferred embodiment at least one of the electronic noncontacting magnetic sensors 524,528 include a magnetoresistive material, preferably with electrical resistance changes in the presence of the magnetic target 518 magnetic field, preferably with magnetoresistive elements arranged in a Wheatstone bridge. In a preferred embodiment at least one of the electronic noncontacting magnetic sensors 524,528 includes a Hall Effect element, preferably a plurality of oriented Hall Effect elements, preferably silicon semiconductor Hall effect elements.

In a preferred embodiment the electronic noncontacting magnetic sensor includes a magnetoresistive material, preferably with electrical resistance changes in presence of a sensed magnetic field, preferably with magnetoresistive elements arranged in a Wheatstone bridge integrated circuit sensor chip with a planar format providing a sensor plane. In a preferred embodiment the electronic noncontacting magnetic sensor includes a Hall Effect element, preferably a plurality of oriented Hall Effect elements, preferably silicon semiconductor Hall effect elements arranged in an integrated circuit sensor chip with a planar format providing a sensor plane.

In an embodiment the invention includes a controllable brake. The controllable brake preferably includes a rotating magnetic target. The controllable brake preferably includes a magnetically permeable rotor. The controllable brake preferably includes a shaft connected to the magnetically permeable rotor. The controllable brake preferably includes a housing having a first housing chamber rotatably housing the magnetically permeable rotor therein, and including a magnetic field generator spaced from the magnetically permeable rotor, and configured and positioned for generating a controllable magnetic field to control a relative motion of the magnetically permeable rotor, and a second housing chamber containing control electronics therein, the second housing chamber electronics including at least a first oriented electronic noncontacting magnetic sensor, the at least first oriented electronic noncontacting magnetic sensor oriented relative to the rotating magnetic target and the shaft wherein the at least first oriented electronic noncontacting magnetic sensor monitors the rotation of the rotating magnetic target.

Preferably the controllable brake 500 includes rotating magnetic target 518. The controllable brake 500 preferably includes magnetically permeable rotor 508. The controllable brake preferably includes shaft 512 connected to the magnetically permeable rotor 508. The controllable brake preferably includes housing 502 having a first housing chamber 504 rotatably housing the magnetically permeable rotor 508 therein, and including a magnetic field generator 510 spaced from the magnetically permeable rotor 508, and configured and positioned for generating a controllable magnetic field 536 to control a relative motion of the magnetically permeable rotor 508, and a second housing chamber 506 containing control electronics 520 therein, the second housing chamber electronics 520 including at least a first oriented electronic noncontacting magnetic sensor 524, the at least first oriented electronic noncontacting magnetic sensor oriented relative to the rotating magnetic target 518 and the shaft 512 wherein the at least first oriented electronic noncontacting magnetic sensor monitors the rotation of the rotating magnetic target 518. Preferably the brake includes a controllable material 532, preferably contained in the first chamber 504 between and preferably filling the space between the magnetically permeable rotor 508 and the magnetic field generator 510 with the magnetic field generator spaced from the magnetically permeable rotor with the controllable material in-between the two with the two configured and positioned for generating a controllable magnetic field 536 to control the relative motion of the magnetically permeable rotor 508 relative to the magnetic field generator 510 with the magnetic field flux 536 through the controllable material 532 sealed in the first chamber between the magnetically permeable rotor and magnetic field generator controlling the relative motion. Preferably the at least first electronic noncontacting magnetic sensor provides a detected measured rotational position of the rotor, and the circuit board 520 control electronics are electrically connected with the magnetic field generator 510 and provide electrical control of the magnetic field generator 510 to apply a magnetic field 536 whose strength is determined by the detected measured rotational position of the rotor. Preferably the circuit board 520 control electronics electrical contact connections leads 548 deliver a current 538 to the EM coil 546, preferably with the electronics circuit board providing current i to EM coil 546 for applying magnetic field 536 whose strength is determined by the relative rotational position of the rotor 508 as the magnetic target rotation angle sensed by the at least one noncontact oriented senor. Preferably the at least first oriented electronic noncontacting magnetic sensor is integrated into brake operation electronics control board 520 mounted in the second sealed chamber 506 wherein the brake operation electronics control board 520 controls the operation of the controllable brake 500. Preferably the noncontacting magnetic sensor has a sensor plane 526, 530 oriented with the shaft axis of rotation 516, preferably with the sensor plane parallel with control board plane 522 with such normal to shaft axis of rotation 516, with the rotation axis 516 intersecting the sensor plane proximate the sensing center of the noncontacting magnetic sensor. Preferably the controllable brake 500 includes a second oriented electronic noncontacting magnetic sensor 528, wherein the first electronic noncontacting magnetic sensor 524 and the second electronic noncontacting magnetic sensor 528 are integrated into brake operation electronics control board 520 mounted in the second sealed chamber 506 wherein the brake operation electronics control board 520 controls and/or monitors the operation of the controllable brake 500. Preferably the at least first and second magnetic sensors 524, 528 have a sensor planes oriented with the shaft axis of rotation 516, preferably with the sensor planes parallel with control board plane 522, with such planes normal to shaft axis of rotation, with the control board plane 522 between the first and second sensor planes 526 and 530. Preferably the brake operation electronics control circuit board 520 has a less than one millimeter thickness between the first oriented electronic noncontacting magnetic sensor 524 and the second oriented electronic noncontacting magnetic sensor 528, and the rotating magnetic target 518 is comprised a shaft oriented permanent magnet, preferably with permanent magnet N-S pole axis 534. Preferably the magnetic sensors have sensor planes oriented with the shaft axis of rotation 516, preferably with the sensor planes parallel with the control board plane, with such normal to the shaft axis of rotation, with the control board plane of the less than one millimeter thickness circuit board between the first and second sensor planes.

In an embodiment preferably at least one of the electronic noncontacting magnetic sensor includes a magnetoresistive material, preferably with electrical resistance changes in presence of the target magnetic field, preferably with magnetoresistive elements arranged in a Wheatstone bridge. In an embodiment preferably at least one of the electronic noncontacting magnetic sensor includes a Hall Effect element, preferably a plurality of oriented Hall Effect elements, preferably silicon semiconductor Hall effect elements for sensing shaft rotational changes of the target magnetic field.

Preferably the integrating the shaft and rotor includes connecting the rotor with the shaft in a manner to restrain relative rotation there between. Preferably the shaft, the movable brake member rotor, and the magnetic target permanent magnet have an axis of rotation 516 with the circuit board plane 522 oriented normal to the axis of rotation 516 with the axis of rotation going through the sensor centers, preferably with the north south axis 534 perpendicular with the shaft axis of rotation 516. Preferably the electronic circuit board 520 has a less than one millimeter thickness between the first oriented electronic noncontacting magnetic sensor 524 and the second oriented electronic noncontacting magnetic sensor 528, and preferably the rotating magnetic target 518 8 is comprised of a shaft oriented permanent magnet.

Preferably the magnetic target 518 includes a permanent magnet with a north pole and a south pole opposed along a north south axis 534 with the north south axis perpendicular with the axis of rotation 516, preferably with the overlapping, integrated oriented sensors 524, 528, preferably providing at least a first position output, at least a second position output, and at least a third position output, and most preferably four simultaneously detected position outputs, with the motion control system including a position output processor for processing the multiply position outputs, preferably with the position output processor comparing the multiply outputs to determine if there is a suspected error output and exclude such suspected error output from the control system process loop. Preferably the control system provides a multiply redundancy control sensor system with the sensors at least three simultaneously sensed positions outputs monitored and compared for suspected error output, with error outputs excluded from the electronic control system determination control loops (either within an inner control loop operating within the control system electronic circuit board 520 or an outer control loop within which the board is integrated into to provide the outputted target sensed positions). In an embodiment the electronic noncontacting magnetic sensors include magnetoresistive materials with electrical resistance changes in the presence of the magnetic target magnetic field, preferably with sensor magnetoresistive elements arranged in a Wheatstone bridge to sense the rotating magnetic field of the magnetic targets pole axis 534. In an embodiment the electronic noncontacting magnetic sensors include a Hall Effect element, preferably a plurality of oriented Hall Effect elements, preferably silicon semiconductor Hall effect elements integrated together to sense the rotating magnetic field of the magnetic targets pole axis 534. Preferably the electronic circuit board 520 has a less than one millimeter thickness between the first oriented electronic noncontacting magnetic sensor and the second oriented electronic noncontacting magnetic sensor, and preferably the rotating magnetic target includes a shaft oriented permanent magnet.

Preferably the first electronic noncontacting magnetic sensor and the second electronic noncontacting magnetic sensor provide the circuit board 520 with at least a first position output, at least a second position output, and at least a third position output, and preferably four simultaneously detected position outputs, with the motion control system including a position output processor for processing the multiply position outputs, which preferably compares the multiply outputs to determine if there is a suspected error output and exclude such suspected error output from the determination in a control system control loop step.

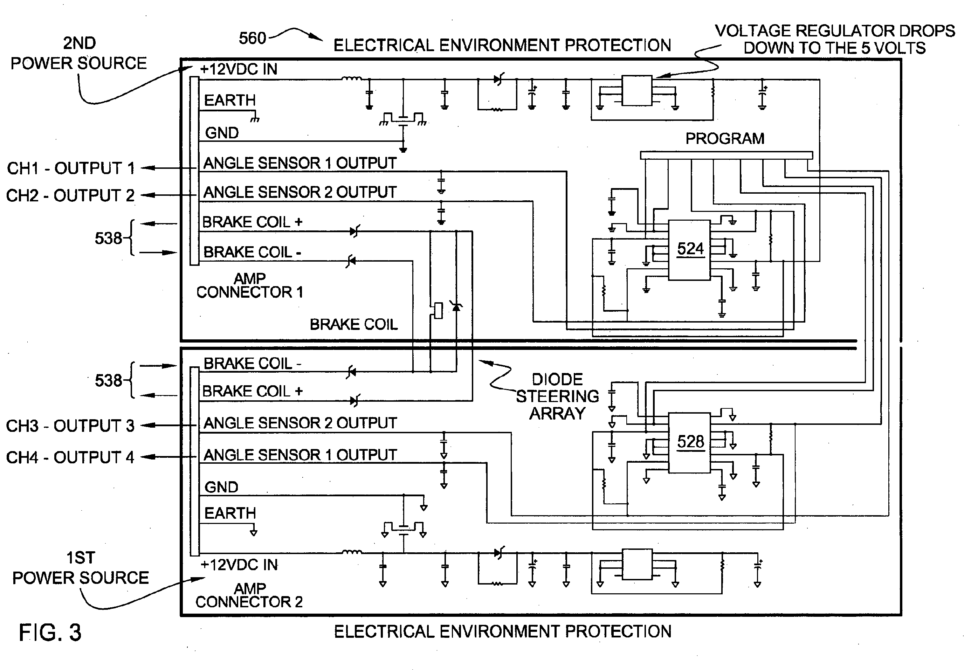

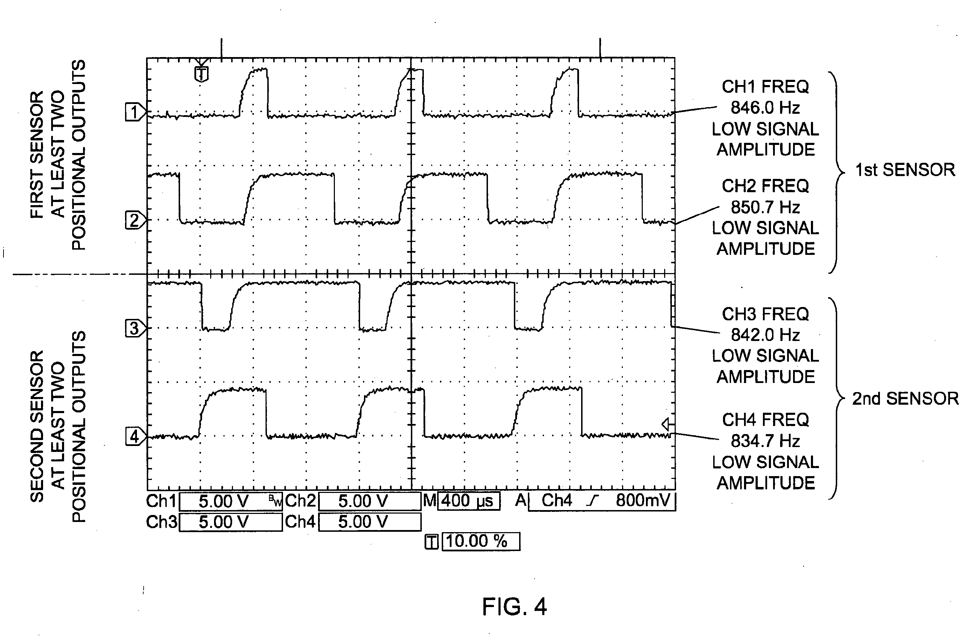

Preferably the circuit board 520 includes electrical environmental protection circuitry. Preferably the circuit board circuitry includes electrical environmental protection circuitry 560 such as shown in FIG. 3. Preferably the circuit board circuitry includes a voltage regulator which drops down a first supplied voltage to the board down to a lowered sensor voltage for the sensor, such as the LM2931 voltage regulator such as shown in FIG. 3 dropping down the 12 volt power down to the 5 volt power supplied to the sensors 524, 528. Preferably the electrical environmental protection circuitry includes an electromagnetic filter providing EMC filtering protection. Preferably the circuit board 520 includes a first and a second power source, with the circuit board controlling the supply, conditioning and distribution of electrical power from the at least two power sources, to provide a controlled current 538 to the brake coil 546. The circuit board 520 provides control, supply, conditioning and distribution of current to the sensors 524, 528 and the EM coil 546 of the field generator 510, and output sensed angular position data such as shown in FIG. 4. Additionally in an embodiment the control system includes an outer control loop with the EM coil controlled outside the inner loop utilizing the output sensed angular position data from the sensors and board control system, such as with the FIG. 4 output data used to determine and produce a control current to EM coil 546 to control a relative motion with the brake 500. Preferably the at least two power sources provide for power supply to the same sensor. In a preferred embodiment the first power supply provides power to both sensors, with a backup secondary power supplied to the sensors from the second power supply. In preferred embodiments the 12 volt power to the circuit board 520 and the outputted sensed angular position data from the sensors are provided through the electronics outer loop conduit utilizing two separate cables routing the wiring into the second chamber 506. Preferably two separate cabled power supplies are supplied to the double sided board 520, with the circuit board 520 providing two isolated power supplies to a sensor. Preferably two separate cabled power supplies are supplied to the double sided board 520, with the circuit board 520 including electronics to send power to the EM brake coil 546, preferably at least with a control current 538 provided such as with the current control flyback diode steer current from two isolated power supplies supplied to the brake EM coil 546. In a preferred embodiment the board includes a processor that determines on board with an inner loop in the brake 500 to provide the control current 538 to the EM coil 546 based on the sensed position of the magnetic target 518, preferably with a position output processor processing the multiply position outputs from the sensors, which preferably compares the multiply outputs to determine if there is a suspected error output and exclude such suspected error output from the determination in the system control loop step. Preferably one set of electrical contact connections 548 deliver the control current 538 to the EM coil from the diode steering array. As shown in FIG. 4, the integrated oriented first and second sensors provide four detected target positions, preferably providing the absolute angular position of the rotating magnetic target 518, the shaft 512, and the rotor 508, preferably with the four outputs monitored and compared to detect a suspected erroneous output which in turn is ignored and not utilized in the determination of controlling the motion of the rotor with the field generator 510. FIG. 4 shows the positional outputs from two integrated circuit semiconductor sensor chip electronic noncontacting magnetic sensors 524, 528 mounted to opposing sides of a circuit board 520 for detecting the rotation of the target 518, the shaft 512, and the rotor 508. Channels 1 and 2 (Ch1, Ch2) show the at least two positional outputs (Ch1, Ch2) for the first integrated circuit semiconductor sensor chip electronic noncontacting magnetic sensor. Channels 3 and 4 (Ch3, Ch4) show the at least two positional outputs (Ch3, Ch4) for the second integrated circuit semiconductor sensor chip electronic noncontacting magnetic sensor. In this embodiment each of the integrated circuit semiconductor sensor chip electronic noncontacting magnetic sensors provided simultaneously two positional outputs (Ch1, Ch2) and (Ch3, Ch4). Preferably the electronic noncontacting magnetic sensor integrated circuit semiconductor sensor chip has at least two dies. Preferably the at least two dies are ASICs (Application Specific Integrated Circuits). In a preferred embodiment the at least two dies are side by side dies in the integrated circuit semiconductor sensor chip. In a preferred embodiment the at least two dies are vertically stacked dies in the integrated circuit semiconductor sensor chip. In a preferred embodiment the integrated circuit semiconductor sensor chip ASIC die include a magnetoresistive material, preferably with electrical resistance changes relative to the rotating shaft magnetic target magnetic field, preferably with magnetoresistive elements arranged in a Wheatstone bridge. In a perfect embodiment the integrated circuit semiconductor sensor chip ASIC die include a Hall Effect element, preferably a plurality of oriented Hall Effect elements, preferably silicon semiconductor Hall Effect elements which detect changes relative to the rotating magnetic target magnetic field of the rotating shaft magnetic target.

## Claims

1. A controllable brake (500) comprising:
a housing (502) comprising a first chamber (504) and a second chamber (506),
a shaft (512), the shaft (512) extending through the first chamber (504) and the second chamber (506) with an axis of rotation (516), said shaft (512) having a first shaft end (514),
a controllable brake rotor (508) made integral with the shaft (512), said rotor (508) housed in the first chamber (504),
a controllable brake magnetic field generator (510) located in the first chamber (504) proximate the controllable brake rotor (508), said controllable brake magnetic field generator (510) for generating a controllable magnetic field strength,
and
a controllable brake rotating magnetic target (518) integral with said shaft (512) proximate said first shaft end (514), said controllable brake rotating magnetic target (518) housed in the second chamber (506), and a controllable brake electronics circuit board mounted in said second chamber, said controllable brake electronics circuit (520) board having a control board plane (522), **characterised in that** said control board plane (522) oriented normal to said axis of rotation (516), a first electronic noncontacting magnetic sensor (524) having a first sensor plane (526), said first electronic noncontacting magnetic sensor (524) integrated on said controllable brake electronics circuit board (520) with said first sensor plane (526) parallel with said control board plane (522), a second electronic noncontacting magnetic sensor (528) having a second sensor plane (530), said second electronic noncontacting magnetic sensor (518) integrated on said controllable brake electronics circuit board (526) with said second sensor plane (530) parallel with said control board plane (520) with said control board plane (520) between said first sensor plane (526) and said second sensor plane (530), said first electronic noncontacting magnetic sensor (524) and said second electronic noncontacting magnetic sensor (526) monitoring the rotation of said controllable brake rotating magnetic target (518) and outputting a rotational position of said controllable brake rotating magnetic target (518) wherein the controllable magnetic field strength generated by said controllable brake magnetic field generator (510) is determined by said rotational position to control a relative motion of said controllable brake rotor (508).

2. The controllable brake of claim 1, wherein said controllable brake (500) rotating magnetic target (518) is comprised of a permanent magnet with a north pole and a south pole opposed along a north south axis (534), said north south axis (534) perpendicular with said shaft axis of rotation (516).

3. The controllable brake of claim 1, said controllable brake (500) including a field responsive controllable material (532) in said first chamber (504), said field responsive controllable material being affected by said controllable magnetic field strength, and said magnetic field generator (510) is adapted to generate a magnetic flux in a direction through said field responsive controllable material (532) towards said rotor (508).

4. The controllable brake of claim 1, said controllable brake (500) including a field responsive controllable material (532) sealed in said first chamber (504) with rheology of said field responsive controllable material being affected by said controllable magnetic field strength, and said magnetic field generator (510) is adapted to generate a magnetic flux in a direction through said field responsive controllable material (532) towards said rotor (508), and said controllable brake electronics circuit board (522) provides a controlled current to said magnetic field generator (510).

5. The controllable brake of claim 1 wherein said magnetic field generator (510) comprises an electromagnetic coil and said controllable brake electronics circuit board (522) is electrically connected with said magnetic field generator electromagnetic coil.

6. The controllable brake of claim 1 where said electronic noncontacting magnetic sensor (524) includes a magnetoresistive material

7. The controllable brake of claim 1 wherein said electronic noncontacting magnetic sensor (524) includes a Hall Effect element.

## Patentansprüche

1. Steuerbare Bremse (500), umfassend ein Gehäuse (502) mit einer ersten Kammer (504) und einer zweiten Kammer (506); eine Welle (512), die sich durch die erste Kammer (504) und die zweite Kammer (506) erstreckt und eine Drehachse (516) aufweist, wobei die Welle (512) ein erstes Wellenende (514) aufweist; des weiteren umfassend einen steuerbaren Bremsenrotor (508), der mit der Welle (512) ein einheitliches Ganzes bildet und in der ersten Kammer (504) angeordnet ist; ferner umfassend einen steuerbaren Bremsenmagnetfeldgenerator (510), der sich in der ersten Kammer (504), in der Nähe des steuerbaren Bremsenrotors (508) befindet, wobei der steuerbare Bremsenmagnetfeldgenerator (510) zur Erzeugung einer steuerbaren Magnetfeldstärke dient; und auch noch umfassend eine steuerbare Bremse mit rotierendem magnetischen Ziel (518), das mit der genannten Welle (512) ein einheitliches Ganzes bildet, in der Nähe des ersten Wellenendes (514), wobei diese steuerbare Bremse mit rotierendem magnetischen Ziel (518) in der zweiten Kammer (506) angeordnet ist und in dieser zweiten Kammer eine elektronische Leiterplatte der steuerbaren Bremse angebracht ist, und die steuerbare elektronische Bremsenleiterplatte (520) eine Steuerplattenebene (522) hat, **dadurch gekennzeichnet, daß** die Steuerplattenebene (522) senkrecht zu der Drehachse (516) ausgerichtet ist, und ein erster kontaktloser magnetischer Sensor (524) mit einer ersten Sensorebene (526) versehen ist, wobei dieser erste elektronische kontaktlose magnetische Sensor (524) auf der steuerbaren elektronischen Bremsenleiterplatte (52) mit dieser ein einheitliches Ganzes bildet, wobei ferner die erste Sensorebene (526) parallel zu der Steuerplattenebene (522) liegt, ein zweiter kontaktloser elektronischer magnetischer Sensor (528) vorhanden ist, der eine zweite Sensorebene (530) hat, der zweite elektronische kontaktlose magnetische Sensor (518) auf der steuerbaren elektronischen Bremsenleiterplatte (526) mit letzterer ein einheitliches Ganzes bildet und die zweite Sensorebene (530) parallel zu der Steuerplattenebene (526) liegt, und wobei die Steuerplattenebene (520) zwischen der ersten Sensorebene (520) und der zweiten Sensorebene (530) liegt, wobei ferner der erste elektronische kontaktlose magnetische Sensor (524) und der zweite elektronische kontaktlose magnetische Sensor (526) die Rotation des sich drehenden magnetischen Ziels (518) der steuerbaren Bremse überwachen und eine Drehstellung des rotierenden magnetischen Ziels (518) der steuerbaren Bremse angeben, und wobei schließlich die steuerbare magnetische Feldstärke, die durch den steuerbaren Bremsenmagnetfeldgenerator (510) erzeugt wird, durch die Drehstellung bestimmt wird, um dadurch eine Relativbewegung des steuerbaren Bremsensensors (508) zu steuern.

2. Steuerbare Bremse nach Anspruch 1, **dadurch gekennzeichnet, daß** das rotierende magnetische Ziel (518) der steuerbare Bremse (500) einen Permanentmagneten mit einem Nordpol und einem Südpol aufweist, die längs der Nord-Süd-Achse (534) gegenüberliegen, wobei die Nord-Süd-Achse (534) lotrecht zu der Drehachse (516) der Welle liegt.

3. Steuerbare Bremse nach Anspruch 1, **dadurch gekennzeichnet, daß** die steuerbare Bremse (500) ein feldempfindliches, steuerbares Material (532) in der ersten Kammer (504) aufweist, das durch die steuerbare magnetische Feldstärke beeinflußt wird, und daß der magnetische Feldgenerator (510) in der Lage ist, einen magnetischen Fluß in der Richtung durch das feldempfindliche, steuerbare Material (532) zu dem Rotor (508) zu erzeugen.

4. Steuerbare Bremse nach Anspruch 1, **dadurch gekennzeichnet, daß** die steuerbare Bremse (500) ein feldempfindliches steuerbares Material (532) aufweist, das in der ersten Kammer (504) abgedichtet ist, wobei die Fließeigenschaften des feldempfindlichen steuerbaren Materials durch die steuerbare magnetische Feldstärke beeinflußt wird, und daß der Magnetfeldgenerator (510) in der Lage ist, einen magnetischen Fluß in einer Richtung durch das feldempfindliche steuerbare Material (532) zu dem Rotor (508) zu erzeugen, wobei die steuerbare, elektronische Leiterplatte (520) einen gesteuerten Strom zu dem Magnetfeldgenerator (510) erzeugt.

5. Steuerbare Bremse nach Anspruch 1, **dadurch gekennzeichnet, daß** der Magnetfeldgenerator (510) eine Elektromagnetspule aufweist und die steuerbare elektronische Bremsenleiterplatte (522) elektrisch mit der Elektromagnetspule des Magnetfeldgenerators verbunden ist.

6. Steuerbare Bremse nach Anspruch 1, **dadurch gekennzeichnet, daß** der elektronische, kontaktlose magnetische Sensor (524) ein magnetoresistentes Material aufweist.

7. Steuerbare Bremse nach Anspruch 1, **dadurch gekennzeichnet, daß** der elektronische kontaktlose magnetische Sensor (524) ein Halleffekt-Element bildet.

## Revendications

1. Frein commandable (500) comprenant :
- un boîtier (502) comprenant une première chambre (504) et une seconde chambre (506),
- un arbre (512), l'arbre (512) s'étendant à travers la première chambre (504) et la seconde chambre (506) avec un axe de rotation (516), ledit arbre (512) ayant une première extrémité d'arbre (514),
- un rotor de frein commandable (508) rendu solidaire de l'arbre (512), ledit rotor (508) étant reçu dans la première chambre (504),
- un générateur de champ magnétique de frein commandable (510) situé dans la première chambre (504) à proximité du rotor de frein commandable (508), ledit générateur de champ magnétique de frein commandable (510) étant destiné à générer une intensité de champ magnétique commandable, et
- une cible magnétique tournante de frein commandable (518) d'un seul tenant avec l'arbre (512) à proximité de ladite première extrémité d'arbre (514), ladite cible magnétique tournante de frein commandable (518) étant reçue dans la seconde chambre (506), et une carte de circuit électronique de frein commandable montée dans ladite seconde chambre, ladite carte de circuit électronique de frein commandable (520) ayant un plan de carte de commande (522), **caractérisé par le fait que** ledit plan de carte de commande (522) est orienté normal audit axe de rotation (516), un premier capteur magnétique électronique sans contact (524) a un premier plan de capteur (526), ledit premier capteur magnétique électronique sans contact (524) étant intégré sur ladite carte de circuit électronique de frein commandable (520) avec ledit premier plan de capteur (526) parallèle audit plan de carte de commande (522), un second capteur magnétique électronique sans contact (528) a un second plan de capteur (530), ledit second capteur magnétique électronique sans contact (518) étant intégré sur ladite carte de circuit électronique de frein commandable (526) avec ledit second plan de capteur (530) parallèle audit plan de carte de commande (520) avec ledit plan de carte de commande (520) entre ledit premier plan de capteur (526) et ledit second plan de capteur (530), ledit premier capteur magnétique électronique sans contact (524) et ledit second capteur magnétique électronique sans contact (526) surveillant la rotation de ladite cible magnétique tournante de frein commandable (518) et délivrant en sortie une position en rotation de ladite cible magnétique tournante de frein commandable (518), l'intensité de champ magnétique commandable générée par ledit générateur de champ magnétique de frein commandable (510) étant déterminée par ladite position en rotation pour commander un mouvement relatif dudit rotor de frein commandable (508).

2. Frein commandable selon la revendication 1, dans lequel ladite cible magnétique tournante (518) du frein commandable (500) est constituée d'un aimant permanent ayant un pôle nord et un pôle sud opposés le long d'un axe nord-sud (534), ledit axe nord-sud (534) étant perpendiculaire audit axe de rotation d'arbre (516).

3. Frein commandable selon la revendication 1, ledit frein commandable (500) comprenant une matière commandable répondant au champ (504) dans ladite première chambre (504), ladite matière commandable répondant au champ étant affectée par ladite intensité de champ magnétique commandable et ledit générateur de champ magnétique (510) étant apte à générer un flux magnétique dans une direction passant à travers ladite matière commandable répondant au champ (532) vers ledit rotor (508).

4. Frein commandable selon la revendication 1, ledit frein commandable (500) comprenant une matière commandable répondant au champ (532) scellée de manière étanche dans ladite première chambre (504) avec une rhéologue de ladite matière commandable répondant au champ qui est affectée par ladite intensité de champ magnétique commandable, et ledit générateur de champ magnétique (510) étant apte à générer un flux magnétique dans une direction passant à travers ladite matière commandable répondant au champ (532) vers ledit rotor (508), et ladite carte de circuit électronique de frein commandable (522) fournissant un courant commandé audit générateur de champ magnétique (510).

5. Frein commandable selon la revendication 1, dans lequel ledit générateur de champ magnétique (510) comprend une bobine électromagnétique et ladite carte de circuit électronique de frein commandable (522) est électriquement reliée à ladite bobine électromagnétique de générateur de champ magnétique.

6. Frein commandable selon la revendication 1, dans lequel ledit capteur magnétique électronique sans contact (524) comprend une matière magnétorésistive.

7. Frein commandable selon la revendication 1, dans lequel ledit capteur magnétique électronique sans contact (524) comprend un élément à effet Hall.
